Europäisches Patentamt

European Patent Office

Office européen des brevets

(19)

(11) Veröffentlichungsnummer: **0 033 176**
A2

(12) # EUROPÄISCHE PATENTANMELDUNG

(21) Anmeldenummer: 81200078.4

(22) Anmeldetag: 22.01.81

(51) Int. Cl.³: **F 03 D 1/06**

(30) Priorität: 23.01.80 NL 8000416

(43) Veröffentlichungstag der Anmeldung:
05.08.81 Patentblatt 81/31

(84) Benannte Vertragsstaaten:
AT BE CH DE FR GB LI NL SE

(71) Anmelder: Witsenburg, Paul Alexander
Woerdlaan 49
NL-3554 VJ De Meern(NL)

(72) Erfinder: Witsenburg, Paul Alexander
Woerdlaan 49
NL-3554 VJ De Meern(NL)

(74) Vertreter: Mommaerts, Johan Hendrik, Dipl.-Phys.
Octrooibureau Lux Nassau-Odyckstraat 38
NL-2596 AJ Den Haag(NL)

(54) Flügelrad für eine Windmühle, einen Ventilator oder dergleichen.

(57) Flügelrad für eine Windmühle, einen Ventilator oder dergleichen, umfassend einen steifen Aussenring und eine Nabe, welche mittels Speichenpaare miteinander verbunden sind, welche Speichen gerade zwischen dam Aussenring und der Nabe gespannt sind, wobei auf jedem Paar ein Satz von Flügelkörpern, welche je mit zwei auf dem Speichenabstand liegenden Löchern versehen sind, angeordnet ist, welche Körper zusammen einen Flügel bilden, dessen Krümmung durch die Verdrehung der Nabe in bezug auf den Aussenring bestimmt wird, wobei weiterhin insbesondere der Aussenring drehbar unterstützt sein kann, wobei die Nabe frei bleibt, welche Unterstützung von den Ring zentrierenden Rollen gebildet sein kann, welche Rollen weiterhin für die Bewegungsübertragung benutzt werden können.

./...

*Fig. 2*

Flügelrad für eine Windmühle, einen Ventilator oder dergleichen.

Um den Verbrauch mineraler Brennstoffe zu beschränken, besteht ein wachsender Bedarf an andern Energiequellen. Eine der verfügbaren natürlichen Energiequellen ist die Windenergie.

Schon von alters her sind für diesen Zweck Windmühlen bekannt, jedoch diese sind technisch äusserst unbefriedigend, und haben insbesondere einen schlechten Nutzeffekt. Später sind für diesen Zweck technisch verbesserte Windmotoren für bestimmte Zwecke entwickelt worden, z.B. für das Hochpumpen von Wasser oder für das Erzeugen von Elektrizität in beschränktem Masse, welche Windmotoren meistens eine Anzahl auf einer Nabe montierter steifer Metallflügel umfassen, wobei sich das Ganze frei in den Wind einstellen kann. Die Abmessungen solcher Windmotoren sind jedoch beschränkt, insbesondere wegen des Gewichtes und der Festigkeit der Flügel, während weiterhin deren Gewicht bei grösseren Abmessungen beträchtlich wird. Ein Nachteil ist weiter, dass ein solcher Windmotor, insbesondere dessen Flügel, für einen besonderen Zweck entworfen werden, wobei keine Anpassung an andern Umständen möglich ist, während weiter, insbesondere was die Flügel betrifft, nicht mit einfachen Einheitsbauteilen gearbeitet werden kann. Die Kosten eines solchen Windmotors sind, insbesondere bei grösseren Abmessungen, deshalb erheblich.

Um eine breitere Benützung der Windenergie zu ermöglichen, besteht ein Bedarf an Windmotoren, die aus einfachen und leicht zu fertigen Bauteilen mit geringerer Masse zusammengebaut werden können, und die leicht stark unterschiedlichen Bedingungen angepasst werden können.

Die Erfindung beabsichtigt ein Flügelrad für einen Windmotor oder dergleichen zu schaffen, das diesen Anforderungen entspricht. Was für einen Windmotor gilt, gilt auch für einen Ventilator, womit mechanische Energie in Luftenergie umgewandelt werden kann, sowie
für eine Luftschraube, z.B. für ein als ein Hubschrauber wirkendes
Hubwerkzeug und dergleichen.

Das erfindungsgemässe Flügelrad wird gekennzeichnet durch
einen steifen Aussenring, eine Nabe und einen Satz mindenstens zweier
durch Stangen oder Kabel gebildeten Speichen für jeden Flügel. Diese
Speichen sind etwa nahezu gerade zwischen dem Aussenring und der Nabe
gespannt, wobei die Nabe sich symmetrisch in der Achse des Aussenringes befindet, und durch je mit mindestens zwei Löchern versehene
Flügelkörper mit z.B. spulen- oder stromlinienförmiger Querschnitt,
die zwischen dem Aussenring und der Nabe je auf einem Speichensatz
aufgereiht sind, wobei die Befestigung der Speichen am Aussenring
und an der Nabe derart ist, dass die durch diese Flügelkörper geformten Flügel die für die gewünschte Wirkung erforderliche Krümmung
erhalten.

Insbesondere können die Flügelkörper aus einem leichten
Material wie Kunststoffschaum hergestellt sein, wobei jeder Flügel
aus einer Anzahl einzelner und besonders untereinander gleicher
Flügelkörper bestehen kann, die mit hauptsächlich flachen Stirnflächen gegeneinander liegen, wobei die Wandteile der Stirnflächen
abgeschrägt sein können, während verschiedene Körper eines Flügels
mittels einer glatt daran anschliessenden Umhüllung, besonders aus
Kunststoffolie, Gewebe oder dergleichen, abgedeckt sein können.

In der Nähe der Enden der Speichen können Abstandhälter
angeordnet sein, die die Flügelkörper auf einem geeigneten Abstand
vom Aussenring und/oder der Nabe halten.

Solche Flügel können in einfachster Weise aus leicht herzustellenden Einheitsbauteilen zusammengebaut werden, wobei die
Flügel eine sehr geringe Masse haben, so dass auch bei grösseren
Abmessungen das Ganze ein geringes Gewicht hat. Solche Flügel können
weiterhin in einfacher Weise sehr verschiedenen Anforderungen angepasst werden.

Insbesondere sind die Speichen jeden Satzes in Umfangsrichtung des Aussenringes gesehen nebeneinander mit diesem Aussenring,
und in Axialrichtung gesehen hintereinander mit der Nabe verbunden,
um den auf diesen Speichen aufgereihten Flügelkörper die gewünschte
Krümmung zu erteilen. Weiterhin können die verschiedenen Speichen
jeden Satzes mit verschiedenen Nabenteilen verbunden sein, welche
Nabenteilen in der Axialrichtung hintereinander angeordnet sein können, wobei durch Änderung des Abstandes zwischen diesen Nabenteilen unter Aufrechterhaltung der Spannung in den Speichen und eines festen Abstandes von Punkt zu Punkt zwischen den Speichen eines Satzes die Gestalt der Flügel geändert werden kann. Dadurch kann auch bei einem fertigen Flügelrad eine Anpassung an verschiedenen Bedingungen erzielt werden. Insbesondere kann in zumindest einer Speiche jeden Satzes eine zusätzliche Spannfeder aufgenommen werden um die gegebenenfalls auftretenden kleinen Längenabweichungen in den verschiedenen Stellungen aufnehmen zu können.

Obwohl es möglich ist die Nabe, wie bei den bekannten Windmotoren, auf eine anzutreibene oder angetriebene Achse zu befestigen, hat es öfters den Vorzug, den Aussenring auf Rollen oder dergleichen in einem das Flügelrad umgebenden festen Gehäuse zu unterstützen, welche Rollen vorzugsweise derart kegelförmig ausgebildet sind, dass der Aussenring sichselbst zentrieren wird, wenn dieser durch den Luftstrom gegen die Rolle gepresst wird, während zusätzliche Rollen mit entgegengesetzter Kegelform auf einem bestimmten Abstand von den erstgenannten angeordnet sind um eine Bewegung des Aussenringes in entgegengesetztem Sinne zu verhindern. Ein Teil dieser Rollen kann überdies mit einem Kragen versehen sein, mittels welcher bei Stillstand das Durchfallen des Aussenringes vermieden wird.

Dieses feste Gehäuse kann wie eine Luftstromführung ausgebildet und dabei derart drehbar aufgestellt sein, dass eine Einstellung des Ganzen im Winde möglich wird. Auch die Nabe kann mit einer Kappe mit geeigneter Stromlinienform versehen sein um den Strömungswiderstand zu verringern.

Die Unterstützungsmittel für den Aussenring können mit Mittel zum Übertragen der Bewegungsenergie gekuppelt sein, wozu insbesondere ein Teil der Unterstützungsrollen als Bewegungsübertragungsteile ausgeführt sein können, während es auch möglich ist den Aussenring als einen mit fest angeordneten Magnetspulen zusammenwirkenden Rotor auszuführen um dessen Drehbewegungsenergie in elektrische Energie zu verwandeln. Bei Benutzung als Ventilator, Hebewerkzeug oder dergleichen können diese Übertragungsteile benutzt werden um den Aussenring in Drehung zu versetzen. Schliesslich kan es manchmal nützlich sein in wenigstens einem Teil der Speichen Teile aufzunehmen, die bei Überschreiten einer bestimmten Belastung zerbrechen, so dass bei zu starkem Sturmwind diese Speichen sich vom Aussenring oder von der Nabe lösen werden, wonach die Flügelkörper sich frei in den Wind ausrichten können, so dass dann kein Antrieb des Flügelrades mehr stattfinden wird.

Die Erfindung wird im Untenstehenden an Hand einer Zeichnung näher erläutert; darin zeigt:

Fig. 1 eine schematische Vorderansicht eines erfindungsgemässen Flügelrades ohne darauf angeordnete Flügelkörper und ohne die Mittel für die Unterstützung dieses Flügelrades;

Fig. 2 einen Teilschnitt eines solchen Flügelrades mit schematisch angedeuteten Flügelkörpern und mit andern zusätzlichen Teile für Unterstützung des Flügelrades und Führung der Luftströme;

Fig. 3 einen Schnitt in grösserem Masstab eines Flügelkörpers eines solchen Flügelrades;

Fig. 4 eine Ansicht zwei nebeneinandermontierter Flügelkörper gemäss Fig. 3; und

Fig. 5 zwei stark vereinfachten perspektivischen Abbildungen eines Flügelrades mit zwei verschiedenen Einstellungen dessen Nabenteiles

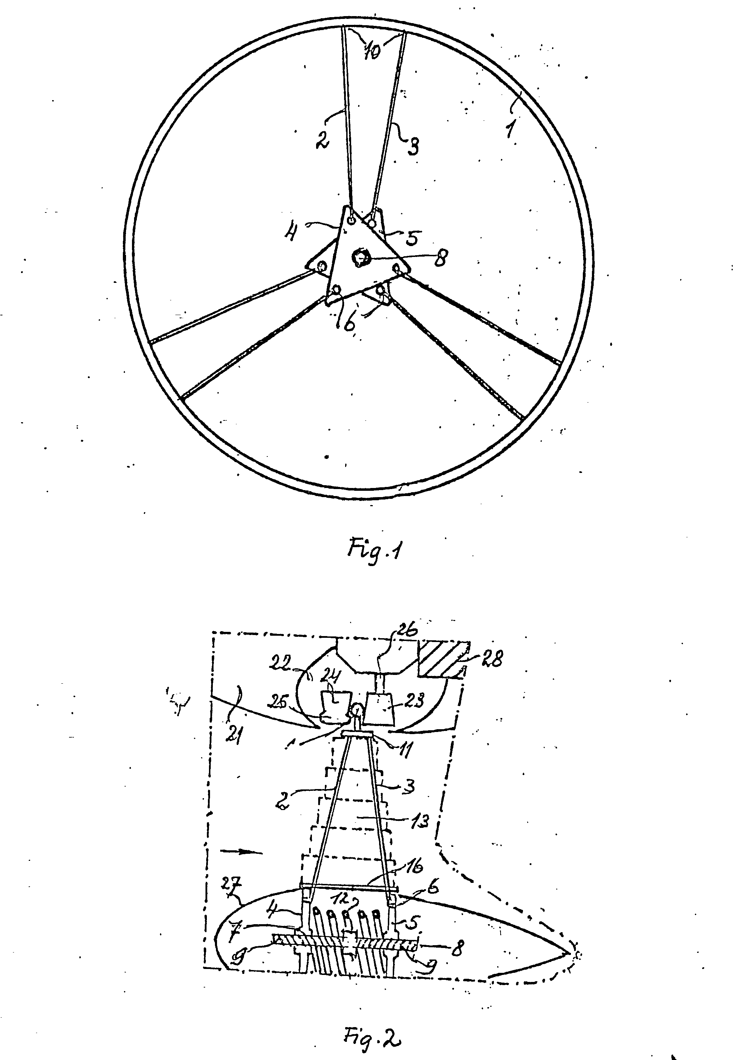

In Fig. 1 ist ein erfindungsgemässes Flügelrad schematisch dargestellt. Dieses Flügelrad besteht aus einem Aussenring 1, der ein offenes oder geschlossenes Profil haben kann, und der z.B. aus einem Leichtmetall oder aus einem ggf. bewehrten Kunststoff hergestellt ist. Dieser Ring kann insbesondere aus einem oder mehreren rohrförmigen Teilen bestehen, deren Enden nach Rundbiegen miteinander vereinigt worden sind.

Mit diesem Ring ist eine Anzahl paarweise angeordneter Speichen 2 und 3, im dargestellten Fall drei Paare, verbunden. Die Speichen 2 sind mit einer erste Nabenhälfte 4, und die Speichen 3 mit einer zweiten Nabenhälfte 5 verbunden. Die Speichen 2 und 3 bestehen z.B. aus Staben oder Kabeln aus Metall oder Kunststoffmaterial mit genügender Zugfestigkeit.

Die Nabenhälften 4 und 5 sind im dargestellten Fall dreieckige Platten, die in den Ecken mit Ösen 6 versehen sind, wo die diesbezüglicher Speichen 2 und 3 fixiert sind, z.B. durch das Einhaken des umgebogenen und ggf. mit einem Anschlag versehenen Ende dieser Speichen. Wie in Fig. 2 dargestellt, sind diese Platten mittels einer Gewindebüchse 7 auf einer Gewindestange 8 mit zwei Gewindeteilen 9 mit entgegengesetztem Gewindesinn angeordnet, so dass bei Drehung der Stange 8 die Platten 4 und 5 aus- oder aufeinanderbewegt werden. Statt eine Gewindestange zu verwenden, können die Platten 4 und 5 auch verschiebbar auf die Stange 8 angeordnet werden, und dann in der gewünschten Stellung mit Hilfe von Sicherungsschrauben oder -Muttern fixiert werden. Auch können mit Luft- oder Flüssigkeitsdruck arbeitende Einstellmittel benutzt werden. Auch im Falle von Gewindestangen kann es empfehlenswert sein, die eingestellte Stellung zusätzlich zu sichern.

Die andern Enden 10 der Speichen sind einigermassen schwenkbar in dem Aussenring 1 oder an einem zusätzlichen Befestigungsteil 11, wie in Fig. 2 dargestellt, befestigt, so dass bei Verstellung der Platten 4 und 5 die Speichen mitbewegen können. Da die Speichen eine feste Länge haben, werden die Platten 4 und 5 bei einer Axialverschiebung drehen können. Falls erforderlich können in den Speichen 2 und 3, insbesondere bei deren Enden, nicht dargestellte Spannfedern vorgesehen werden um die möglicherweise auftretenden Abweichungen im Abstand zwischen den Befestigungspunkten aufnehmen zu können. Es kann manchmal nützlich sein zwischen den Platten 4 und 5 eine Torsionsfeder 12 vorzusehen, mit welcher diese Platten derart gedreht gehalten werden, dass die Speichen gespannt bleiben. Der Drehsinn bestimmt dabei die Krümmung der Flügel, und dadurch auch den Umdrehungssinn des Flügelrades.

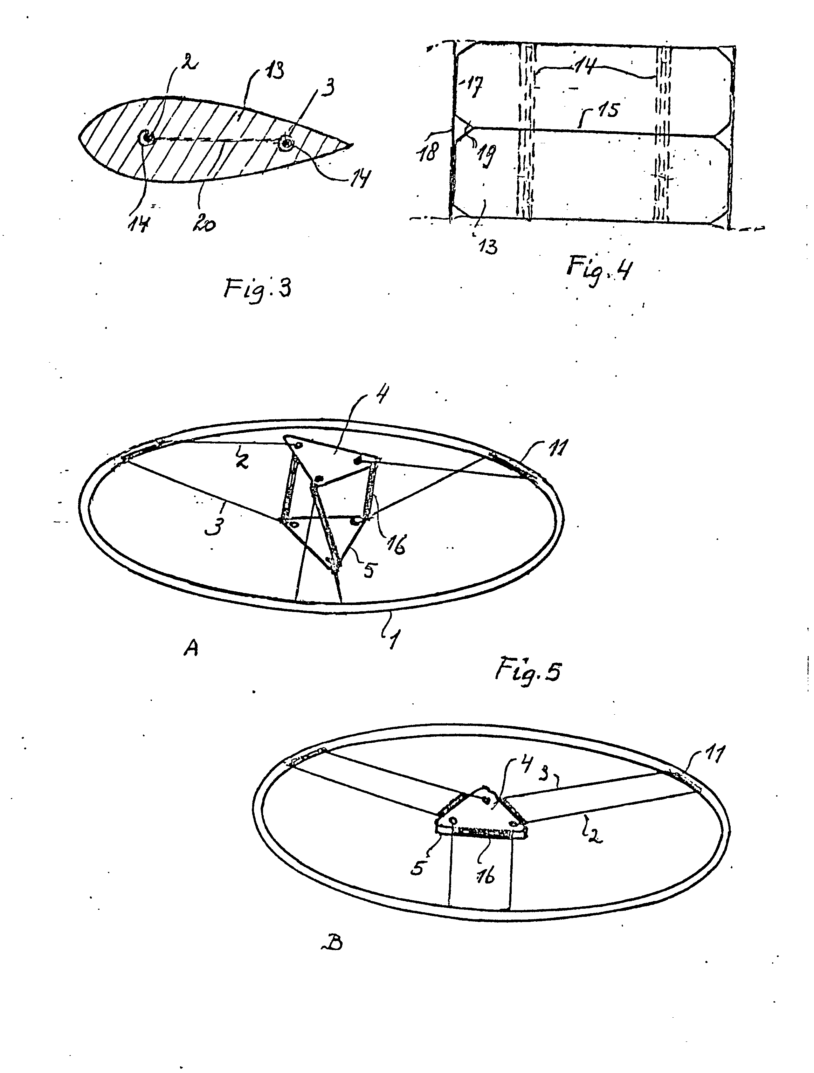

Auf den Speichen 2 und 3 sind Flügelkörper 13 angeordnet, die in Fig. 3 und 4 deutlicher dargestellt sind. Diese bestehen zum Beispiel aus Kunststoffschaum oder einem andern leichten Material. Diese Körper haben einen spulen- oder stromlinienförmigen Querschnitt, und haben im dargestellten Fall je zwei Löcher 14, zwischen welchen der Abstand gleich dem Abstand zwischen den Befestigungspunkten 10 der Speichen 2 und 3 am Aussenring 1 oder am Befestigungsteil 11 ist. Diese Körper haben flache Stirnflächen 15, die, wenn die Körper auf den Speichen 2 und 3 aufgereiht worden sind, gegeneinanderliegen. In der Nähe der Platten 4 und 5 kann auf den Speichen 2 und 3 noch ein zusätzlicher Unterstützungsteil 16 vorgesehen sein, mittels welches der innere Körper 13 auf einem geeigneten Abstand von den Platten 4 und 5 gehalten werden.

Wenn die Speichen, wie in Fig. 1 und 2 dargestellt, einander kreuzen, begrenzen die Aussenoberflächen 17 dieser Körper eine mehr oder weniger schraubenflächenförmige Oberfläche. Vorzugshalber wird die so gebildete Oberfläche noch mittels einer Bekleidung 18, zum Beispiel einer geeigneten Kunststoffolie oder eines Gewebes, die glatt an den Flügelkörpern anliegt, jedoch genügend nachgiebig ist um, die Formänderungen zu folgen. Eine solche Bekleidung vermindert den Luftwiederstand zufolge Wirbel an hinausragenden Rändern verschiedener Flügelkörper 13, während auch der Effekt der Flügel dadurch verbessert wird, dass keine Luft zwischen den gegeneinander liegende Flügelkörpern hindurchströmen kann. Falls, wie in Fig. 4 abgebildet, die Ränder 19 der verschiedenen Körper einigermassen abgeschrägt werden, wird eine noch glättere Oberfläche erhalten.

Die verschiedenen Flügelkörper 13 können untereinander gleiche Abmessungen haben, während mit solchen Körpern Flügel verschiedener Abmessungen gebildet werden können. Die Speichen 2 und 3 nehmen die Kräfte auf, während die Flügelkörper 13 ausschliesslich aazu dienen um den Flügeln die für die Kraftübertragung gewünschte Gestalt zu geben. Wenn die Nabenhälften 4 und 5 verstellt werden, bleibt der Abstand zwischen den beiden Speichen hauptsächlich derselbe, wobei nur die Flügelkörper 13 gegeneinander eine geringe Verdrehung erhalten. Falls erforderlich können in den Flügelkörpern 13 Zugentlastungsteile 20 aufgenommen werden, deren Enden die Speichen 2 und 3 umfassen, so dass die eigentlichen Flügelkörper nicht auf Zug belastet werden. Dies ist bei Verwendung von Kunststoffschaum wegen der geringen Festigkeit ratsam. Diese Körper können auch als zwischenliegende steife Platten ausgeführt sein, die die Steifheit vergrössern.

In dieser Weise können mit einer geringeren Anzahl von Flügelkörpern 13 verschiedener Abmessungen Flügelräder sehr verschiedener Abmessungen hergestellt werden. Obwohl es möglich ist die Flügel aus einem Stück herzustellen, hat der Aufbau aus gesonderten Teilkörpern 13 den Vorzug, da dann die Flügelform leichter den Anforderungen angepasst werden kann.

Fig. 5 zeigt in stark vereinfachter Weise wie durch Verstellen der Nabenhälften 4 und 5 die Flügelform geändert werden kann. Im Fall der Fig. 5A stehen die Platten in grösstem Abstand, wobei die Punkte 6 aufeinander ausgerichtet sind. Die Flügel erhalten dann die grösste schraubenflächenförmige Krümmung. Im Fall der Fig. 5B liegen die Nabenhälften 4 und 5 gegeneinander, wobei diese gegeneinander verdreht sind um die Speichen 2 und 3 gespannt zu halten. In diesem Fall sind die Flügel völlig flach, so dass das Flügelrad als solches unwirksam ist. Alle Zwischenstellungen zwischen diesen äussersten Stellungen sind möglich.

Das in Fig. 2 abgebildete Flügelrad ist in einem schematisch angedeuteten Aussenmantel 21 aufgenommen, der eine für diesen Zweck bekannte Strahlrohrform haben kann, um den Wind in günstiger Weise den Flügeln zuzuführen. Dieser Mantel kann darüberhinaus um eine vertikale Achse drehbar unterstützt sein, um das Flügelrad immer quer zur Windrichtung einstellen zu können. Dieser Aussenmantel kann zum Beispiel aus Teilkörpern aufgebaut sein, die zum Beispiel wiederum aus Kunststoffschaum bestehen können, und die auf einer Anzahl tragender Ringen, Reifen oder dergleichen unterstützt sein können.

Im dargestellten Fall hat der Mantel 21 eine herumgehende Aussparung 22, in welcher ein erster Satz von Führungsrollen 23 vorgesehen ist. Die Rollen 20 sind in der Hauptsache sich kegelförmig nach oben verjüngend ausgeführt. Wenn der Wind von links kommt, wird der Aussenring 1 gegen diese Rollen gepresst, wobei die Abschrägung dazu führt, dass der Ring 1 zentriert bleibt. In entgegengesetztem Sinn wird der Ring 1 von einem zweiten Rollensatz 24 mit entgegengesetztem Verlauf festgehalten, so dass der Abstand zwischen den Rollen 23 und 24 wenigstens ungefähr konstant ist, während ggf. die Rollen 24 unter Federdruck stehen können. Um zu vermeiden, dass der Ring bei Stillstand hinunterfällt, können die oberen Rollen 24 mit einem Kragen 25 versehen werden.

Diese Unterstützungsweise ist sehr günstig, da Abmessungsänderungen wegen Temperaturwechslungen keinen Einfluss auf die Unterstützung haben. Die Mittelachse, die hier durch den Gewindestift 8 gebildet wird, braucht nicht unterstützt zu werden, so dass diese Achse nicht belastet ist.

Es ist selbstverständlich möglich die Achse 8 zum Entnehmen (oder im Fall eines Ventilators zum Zuführen) mechanischer Energie zu benutzen, wozu diese Achse zum Beispiel mit einer nachgiebigen Kupplung mit einer Ausgangsachse gekuppelt sein kann. Vorzugsweise wird für diesen Zweck mindestens ein Teil der Rollen 23 benutzt, die dann mit einem elektrischen Generator 26 verbunden sein können, um so die Bewegungsenergie in elektrische Energie umzuwandln. Da der Ring 1 vom Wind gegen die Rollen 23 gepresst wird, und dies mit desto grösserer Kraft je nachdem die Windkraft grösser ist, wird auch die Reibung zwischen dem Ring 1 und diesen Rollen zunehmen, so dass bei grösseren Drehgeschwindigkeiten des Flügelrades die Kupplung mit den Generatoren 26 oder dergleichen versichert bleibt. Es ist selbstverständlich auch möglich den Aussenring 1 mit Magneten zu versehen, die mit fest im Aussenmantel angeordneten Spulen für eine direkte Erzeugung elektrischer Energie zusammenarbeiten können. Die Generatoren 26 können selbstverständlich durch Motoren ersetzt werden, wenn das Flügelrad als ein Ventilator arbeiten muss. Gegebenenfalls kann die Bewegung direkt in Wärme umgewandelt werden.

Bei Antrieb des Flügelrades kann dieses, wenn die Achse ungefähr senkrecht aufgestellt wird, auch als Hubwerkzeug benutzt werden, das in gleicher Weise wie ein Hubschrauber eine Last heben kann, zum Beispiel in solchen Fällen, dass kein Kran oder dergleichen verwendet werden kann.

Wenn die Gefahr besteht, dass bei sehr kräftigem Wind das Flügelrad beschädigt wird, kann es empfehlenswert sein in beispielsweise den Speichen 3 Teile mit begrenzter Zugfestigkeit aufzunehmen, die bei einer zu grossen Belastung brechen werden. In jenem Fall werden die Flügelkörper 23 sich frei im Winde einstellen, so dass keine Kraftübertragung mehr stattfinden wird.

Auf der Achse 8 kann weiter noch, wie in Fig. 2 dargestellt, eine Führungskappe 27 angeordnet werden um den Luftstrom um die Achse herumzuführen. Bei 28 ist noch ein tragender Ring im Aussenmantel angedeutet, an welchen die Generatoren 26 befestigt werden können.

Statt der verstellbaren Befestigung der Nabenteilen 4 und 5 können selbstverständlich auch feste Nabenteile verwendet werden. Eine verstellbare Befestigung hat jedoch den Vorteil, dass eine selbe Nabe für Flügelräder verschiedener Abmessungen oder für verschiedene Zwecke verwendet werden kann. Selbstverständlich kann nach Einstellung das Ganze gesichert werden, jedoch es ist auch möglich stetig verstellbare Einstellmittel zu verwenden, die zum Beispiel in einem Rückkupplungskreis aufgenommen sein können, zum Beispiel um die Umdrehungsgeschwindigkeit festzuhalten, welche Einstellmittel elektromechanisch, hydraulisch oder pneumatisch ausgeführt sein können.

Die für den Zusammenbau der Flügel benutzten Körper können insbesondere dieselbe Form und Abmessungen haben, so dass dann mit einer geringen Anzahl von Einheitsbauteilen gearbeitet werden kann. Wegen der Verstellbarkeit der Nabe kann die Zahl der Abmessungen gering gehalten werden, da mit der Nabe eine zusätzliche Einstellung erzielt werden kann.

Die Befestigung der Speichen am Aussenring kann zum Beispiel mittels hohler Spreiznieten stattfinden, die in Löchern des Aussenringes festgesetzt werden, was bei einem rohrförmigen Ring besonders günstig ist. Bei Verwendung einer zusätzlichen Abstandplatte 11 können die Befestigungsmittel auch auf diese Platte angeordnet werden, wobei es weiterhin möglich ist durch Drehung dieser Platte die Lage dieser Befestigungspunkte in bezug auf die Ebene durch den Aussenring zu ändern, vgl. Fig. 2.

Wie bereits angedeutet, kann die mechanische Energie auch direkt in Wärme umgewandelt werden, zum Beispiel mittels Reibungsteilen und eines geeigneten Wärmeaustauschers. Dies kann insbesondere dann zweckmässig sein, wenn es sich um verhältnismässig niedrige Temperaturen handelt, zum Beispiel für die Heizung von Gewächshäuser, Wasserkulturen und dergleichen.

Innerhalb des Aussenmantels können nötigenfalls verschiedene Flügelräder hintereinander angeordnet werden, die insbesondere abwechselnd einen entgegengesetzten Drehsinn haben um Luftwirbeln Einhalt zu tun. Die achsenlose Aufhängung, die im vorhergehenden beschrieben worden ist, macht dies alles sehr einfach.

Es kann weiterhin manchmal nützlich sein, die Flügelkörper an ihren flachen Stirnflächen mit ineinanderpassenden Vorsprüngen und Aussparungen zu versehen, die die gegenseitige Drehung begrenzen, und auch den Windleck vermindern können.

Die Erfindung schafft also die Möglichkeit, mit einer geringeren Anzahl von Einheitsbauteilen äusserst leichte Flügelräder aufzubauen, die stark unterschiedlichen Anforderungen angepasst werden können. In derselben Weise können auch Ventilatoren sehr verschiedener Abmessungen und Leistungen aufgebaut werden, sowie Hebewerkzeuge zum kranlosen Heben von Lasten.

Innerhalb des Umfanges der Erfindung sind noch viele Änderungen möglich.

## Ansprüche

1. Flügelrad für eine Windmühle, einen Ventilator, Hebewerkzeug oder dergleichen, gekennzeichnet durch einen steifen Aussenring, eine Nabe und einen Satz mindestens zweier durch Stangen oder Kabel geformten Speichen für jeden Flügel, welche Speichen etwa nahezu gerade zwischen dem Aussenring und der Nabe gespannt sind, wobei die Nabe sich symmetrisch in der Achse des Aussenringes befindet, und durch je mit mindestens zwei Löchern versehene Flügelkörper mit zum Beispiel spulen- oder stromlinienförmiger Querschnitt, die zwischen dem Aussenring und der Nabe je auf einen Speichensatz aufgereiht sind, wobei die Befestigung der Speichen am Aussenring und an der Nabe derartig ist, dass die durch diese Flügelkörper geformten Flügel die für die gewünschte Wirkung erforderliche Krümmung erhalten.

2. Flügelrad nach Anspruch 1, dadurch gekennzeichnet, dass die Flügelkörper aus einem leichtem Material, insbesondere Kunststoffschaum, hergestellt sind.

3. Flügelrad nach Anspruch 1 oder 2, dadurch gekennzeichnet, dass jeder Flügel aus einer Anzahl einzelner und besonders untereinander gleicher Flügelkörper besteht, die mit hauptsächlich flachen Stirnflächen gegeneinanderliegen.

4. Flügelrad nach Anspruch 3, dadurch gekennzeichnet, dass die Wandteile in der Nähe der Stirnflächen abgeschrägt sind.

5. Flügelrad nach Anspruch 3 oder 4, dadurch gekennzeichnet, dass die verschiedenen Körper eines Flügels mittels einer glatt daran anschliessenden Umhüllung abgedekt sind.

6. Flügelrad nach einem der Ansprüche 1..5, dadurch gekennzeichnet, dass die Speichen jedes Satzes im Umfangssinn des Aussenringes gesehen nebeneinander mit diesem Aussenring, und in der Axialrichtung gesehen hintereinander mit der Nabe verbunden sind.

7. Flügelrad nach Anspruch 6, dadurch gekennzeichnet, dass der Abstand zwischen den Nabenteilen unter Aufrechterhaltung der Spannung in den Speichen und eines festen Abstandes von Punkt zu Punkt zwischen den Speichen eines Satzes veränderbar ist.

8. Flügelrad nach Anspruch 7, gekennzeichnet durch Mittel für das Ändern des Abstandes zwischen den Nabenteilen.

9. Flügelrad nach Anspruch 8, gekennzeichnet durch Mittel für das unter Federspannung Auseinanderdrehen der Nabenteilen für das Aufrechterhalten der Spannung in den Speichen.

10. Flügelrad nach einem der Ansprüche 7..9, dadurch gekennzeichnet, dass in mindestens einer Speiche jedes Satzes eine zusätzliche Spannfeder zum Aufnehmen kleinerer Längeabweichungen aufgenommen ist.

11. Flügelrad nach einem der Ansprüche 1..10, dadurch gekennzeichnet, dass in der Nähe des Aussenringes und oder der Nabe ein Abstandhalter auf jedem Speichensatz angeordnet ist, mittels welches die diesbezüglichen Flügelkörper abgehalten werden.

12. Flügelrad nach Anspruch 11, dadurch gekennzeichnet, dass die Abstandhalter dazu eingerichtet sind um den Speichen eines Satzes eine zusätzliche Drehung in bezug auf die Aussenring- oder Axialebene zu erteilen.

13. Flügelrad nach einem der Ansprüche 1..12, dadurch gekennzeichnet, dass die Nabe nicht unterstützt ist, und dass der Aussenring in einem fest angeordneten Aussenmantel drehbar auf Rollen oder dergleichen unterstützt ist.

14. Flügelrad nach Anspruch 13, dadurch gekennzeichnet, dass die Rollen derart kegelförmig ausgeführt sind, dass der Aussenring dadurch vonselbst zentriert wird.

15. Flügelrad nach Anspruch 14, dadurch gekennzeichnet, dass zusätzliche Rollen mit entgegengesetzter Kegelform auf einem festen Abstand des ersteren angeordnet sind, zwischen welcher der Aussenring passt.

16. Flügelrad nach Anspruch 15, dadurch gekennzeichnet, dass ein Teil der Rollen mit einem Kragen versehen ist, der in den Zwischenraum zwischen einem Rollensatz hineinragt.

17. Flügelrad nach einem der Ansprüche 13..16, dadurch gekennzeichnet, dass der Aussenmantel als eine Luftstromführung ausgebildet ist.

18. Flügelrad nach einem der Ansprüche 1..17, dadurch gekennzeichnet, dass die Nabe mit einer stromlinienförmige Abdeckkappe versehen ist.

19. Flügelrad nach einem der Ansprüche 13..18, dadurch gekennzeichnet, dass der Aussenring mit Mitteln für die Übertragung oder Umwandlung der Bewegungsenergie gekuppelt ist.

20. Flügelrad nach Anspruch 19, dadurch gekennzeichnet, dass mindestens ein Teil der Unterstützungsrollen als Bewegungsübertragungsmittel ausgebildet ist.

21. Flügelrad nach Anspruch 19, dadurch gekennzeichnet, dass

- 12 -

der Aussenring als einen mit fest aufgestellten Magnetspulen zusammenwirkenden Rotor ausgebildet ist.

22. Flügelrad nach einem der Ansprüche 19..21, dadurch gekennzeichnet, dass bei Benutzung als Ventilator oder Hebewerkzeug die Übertragungsmittel ausgelegt sind um den Aussenring anzutreiben.

23. Flügelrad nach einem der Ansprüche 1..22, dadurch gekennzeichnet, dass in mindestens einem Teil der Speichen Teile aufgenommen sind, die beim Überschreiten einer bestimmten Zugbelastung zerbrechen.

24. Flügelrad nach einem der Ansprüche 13..23, dadurch gekennzeichnet, dass zwei oder mehrere Flügelräder hintereinander innerhalb eines selben Aussenmantels angeordnet sind.

25. Flügelrad nach Anspruch 24, dadurch gekennzeichnet, dass die verschiedenen Flügelräder abwechselnd einen entgegengesetzten Drehsinn haben.

Fig.1

Fig.2

Fig. 3

Fig. 4

A

Fig. 5

B